# EUROPÄISCHE PATENTSCHRIFT

(11) **EP 3 569 583 B1**
(45) Veröffentlichungstag und Bekanntmachung des Hinweises auf die Patenterteilung: **03.03.2021**
(21) Anmeldenummer: 18172434.5
(22) Anmeldetag: 15.05.2018
(51) Int. Cl.: C04B 41/49

(54) **BAUWERKSHYDROPHOBIERUNGS-KIT-OF-PARTS UND DESSEN VERWENDUNG SOWIE FLÜSSIGES BAUWERKSHYDROPHOBIERUNGSMITTEL UND DESSEN VERWENDUNG**
BUILDING STRUCTURE HYDROPHOBISATION KIT OF PARTS AND ITS USE, AS WELL AS LIQUID BUILDING STRUCTURE HYDROPHOBISATION AGENT AND ITS USE
JEU DE PIÈCES D'IMPERMÉABILISATION DE CONSTRUCTION ET SON UTILISATION ET AGENT D'IMPERMÉABILISATION DE CONSTRUCTION ET SON UTILISATION

(43) Veröffentlichungstag der Anmeldung: 20.11.2019
(73) Patentinhaber: PS2G GmbH, 60322 Frankfurt am Main (DE)
(72) Erfinder:
(74) Vertreter: Metten, Karl-Heinz

(56) Entgegenhaltungen:
- EP-A1- 0 577 014
- DE-A1- 19 955 047

## Beschreibung

Die vorliegende Erfindung betrifft einen Bauwerkshydrophobierungs-Kit-of-parts, insbesondere einen Mauerwerkshydrophobierungs-Kit-of-parts. Außerdem betrifft die Erfindung die Verwendung des erfindungsgemäßen Kit-of-parts für die Hydrophobierung von Bauwerken, insbesondere von Mauerwerk, z.B. von feuchtem Mauerwerk, für die Beseitigung von Feuchteschäden in einem Bauwerk, insbesondere Mauerwerk, für die Feuchteabdichtung von Bauwerken, insbesondere Mauerwerk, und für die Ausbildung einer Feuchtesperre in Bauwerken, insbesondere in einem Mauerwerk. Ferner betrifft die Erfindung ein flüssiges Bauwerkshydrophobierungsmittel, insbesondere Mauerwerkshydrophobierungsmittel, eine wässrige Zusammensetzung, sowie deren Verwendung.

Feuchteschäden an Bauwerken mindern regelmäßig nicht nur die Wohnqualität und unterlaufen Hygienestandards, sondern tragen mitunter zu einer signifikanten Wertminderung bei. Werden Feuchteschäden an Bauwerken nicht oder erst verspätet behoben, kann es zu einer dauerhaften Schädigung der Bausubstanz bzw. zum Auftreten von Strukturschäden kommen, beispielsweise durch das Auswaschen von Salzen aus mineralischen Baustoffen oder durch den Eintrag von Salzen in poröse Baustoffe. In letzterem Fall nimmt der hygroskopische Charakter des Mauerwerks ständig zu, was zu einer verstärkten Ausbildung von Feuchteschäden führt. Dringt Feuchtigkeit beispielsweise in einen Kellerraum ein, kann die entstehende hohe Luftfeuchtigkeit sowie die häufig damit einhergehende Schimmelpilzbildung eine Nutzung unmöglich machen. Ist Feuchtigkeit erst einmal in Mauerwerk eingedrungen, steigt diese durch die Kapillarwirkung in porösen Baustoffen auch in höhere Bereiche und richtet ebenfalls dort Schäden an, wo das Mauerwerk keinem direkten Feuchteeinfall ausgesetzt ist. Für den Wassereintritt sind häufig Schäden an der Außenabdichtung oder am Fundament verantwortlich.

Um Feuchteschäden an Bauwerken im Nachhinein zurückzudrängen bzw. vollständig zu beheben, ist vielfach ein erheblicher Aufwand erforderlich. Beispielsweise sind Außenwände freizulegen, gegebenenfalls Bestandteile des Mauerwerks zu entfernen und eine verlässliche und dauerhafte Feuchteisolierung neu anzubringen, und zwar in der Regel nach vollständigem Austrocknen des durch Feuchtigkeit in Mitleidenschaft gezogenen Mauerwerks. Eine besonders große Herausforderung stellen für den Fachmann auch solche Feuchteschäden an Mauerwerken insbesondere im Kellerbereich dar, bei denen die Außenseite nicht freigelegt werden kann. Und das Beheben von Feuchteschäden an denkmalgeschützten Gebäuden geht im Allgemeinen mit besonders hohen Kosten einher, da Änderungen an der Bausubstanz nicht vorgenommen werden dürfen.

Dem Fachmann sind zahlreiche Methoden bekannt, um Feuchteschäden zu reparieren. Vielfach wird versucht, eine wasserundurchlässige Abdichtung auf die Außenfläche des betroffenen Bauwerks anzubringen. Gemäß der DE 40 31 745 C2 kann hierfür auf eine Polymer/Bitumen-Emulsion zurückgegriffen werden. Aus der DE 41 27 351 C2 geht ein mehrschichtiges System aus einer alkalischen siliciumhaltigen Grundierung, einer zementmineralischen Zwischenschicht und einer polymerdispersionsmodifizierten zementmineralischen Beschichtung hervor. Kann der Feuchteschaden nur innenseitig repariert werden, stehen dem Fachmann üblicherweise die Imprägnierung der feuchten Wand mittels Injektion sowie das Aufbringen einer feuchtigkeitsdichten innenseitigen Beschichtung zur Verfügung. Mit der Methode der Imprägnierung eines Mauerwerks versucht man üblicherweise, eine sogenannte Horizontalsperre zu installieren, die das weitere Vordringen von Feuchtigkeit unterbindet. Häufig setzt man hierfür Silikonmikroemulsionen bzw. Silikonharze ein, bei denen mittels eines Emulgators die Silikonmaterialien in Form kleiner Tröpfchen in Wasser verteilt vorliegen. Auch ist der Einsatz verdünnter wässriger Wasserglaslösungen bekannt, mit deren Hilfe man eine sogenannte Verkieselungssperre errichten möchte. Verkieselungssperren führen regelmäßig zu Kältebrücken, was einer gewünschten Wärmeisolierung diametral entgegenläuft. Die DE 101 30 091 A1 schlägt eine spezielle cremeartige Wasser-in-Öl-Emulsion für die Hydrophobierung von Mauerwerk mittels Injektion vor. Aufgrund der viskosen Konsistenz der Imprägnierungsmasse soll eine drucklose Befüllung mit nahezu waagerechten Bohrungen möglich sein. Gemäß der DE 10 2004 013 726 A1 soll man für die Injektion in Mauerwerke auch auf Acrylatgele zurückgreifen können. Die Imprägnierung von Mauerwerken über oberhalb von Bohrlöchern angeordneten Flüssigkeitsbehältern wird auch in der EP 270 715 A1, FR 2 605 032 und der GB 1,123,983 thematisiert.

Die DE 10 2010 021 111 A1 beschreibt zur hydrophobierenden Abdichtung von porösen Teilen eines Bauwerks das Einpressen einer pumpfähigen Zusammensetzung in einen porösen Teil des Bauwerks, wobei diese Zusammensetzung Wasser verdrängende oder unterwandernde Eigenschaften zu besitzen hat. Anschließend ist eine Beschichtung aus einem Dichtschlamm auf der Innenseite des behandelten Abschnitts des Bauwerks anzubringen.

Weitere Hydrophobierungsmittel werden in EP 0 577 014 A1 und in DE 199 55 047 A1 beschrieben. Die aus dem Stand der Technik bekannten Verfahren sind noch stets mit Mängeln behaftet. Es wäre wünschenswert, auf eine verbesserte Behandlung von mit Feuchteschäden versehenen Bauwerken zurückgreifen zu können. Daher lag der vorliegenden Erfindung die Aufgabe zugrunde, Bauwerke, die Feuchteschäden aufweisen, in einer Weise reparieren zu können, dass man sowohl zu einem feuchtefreien Bauwerk gelangt, wie auch den erneuten Feuchtebefall dauerhaft und zuverlässig verhindern kann.

Demgemäß wurde ein Bauwerkshydrophobierungs-Kit-of-parts, insbesondere Mauerwerkshydrophobierungs-Kit-of-parts, gefunden, umfassend sowie insbesondere bestehend aus
A) einer ersten wässrigen Zusammensetzung, bestehend aus oder enthaltend
   a0) Wasser,
   a1) mindestens ein Ketonlösungsmittel, Alkohollösungsmittel und/oder Esterlösungsmittel, insbesondere Ketonlösungsmittel, und
   a2) mindestens eine Carbonsäure mit 1 bis 10 Kohlenstoffatomen sowie
   a3) mindestens ein Alkylalkoxysilan und
   a4) mindestens ein Aminoalkylalkoxysilan, und
B) einer zweiten Zusammensetzung, bestehend aus oder enthaltend
   b1) mindestens ein Alkylalkoxysilan und
   b2) mindestens ein Kohlenwasserstofflösungsmittel sowie
   b3) mindestens ein Alkohollösungsmittel und/oder
   b4) mindestens ein Esterlösungsmittel und/oder
   b5) mindestens ein Ketonlösungsmittel.

In einer bevorzugten Ausführungsform ist vorgesehen, dass das erfindungsgemäße Bauwerkshydrophobierungs-Kit-of-parts, insbesondere Mauerwerkshydrophobierungs-Kit-of-parts,
A) eine erste wässrige Zusammensetzung, bestehend aus oder enthaltend
   a0) Wasser,
   a1) mindestens ein Ketonlösungsmittel, Alkohollösungsmittel und/oder Esterlösungsmittel, insbesondere Ketonlösungsmittel,
   a2) mindestens eine Carbonsäure mit 1 bis 10 Kohlenstoffatomen,
   a3) mindestens ein Alkylalkoxysilan und
   a4) mindestens ein Aminoalkylalkoxysilan, sowie
B) eine zweite Zusammensetzung, bestehend aus oder enthaltend
   b1) mindestens ein Alkylalkoxysilan,
   b2) mindestens ein Kohlenwasserstofflösungsmittel,
   b3) mindestens ein Alkohollösungsmittel,
   b4) mindestens ein Esterlösungsmittel und
   b5) mindestens ein Ketonlösungsmittel umfasst oder hieraus besteht.

In einer weiteren bevorzugten Ausführungsform ist das erfindungsgemäße Kit-of-parts gekennzeichnet durch
A) eine erste Zusammensetzung, bestehend aus oder enthaltend
   a0) Wasser,
   a1) mindestens ein Ketonlösungsmittel, Alkohollösungsmittel und/oder Esterlösungsmittel, insbesondere Ketonlösungsmittel,
   a2) mindestens eine Carbonsäure mit 1 bis 10 Kohlenstoffatomen,
   a3) mindestens ein Alkylalkoxysilan und
   a4) mindestens ein, insbesondere in protonierter Form vorliegendes, Aminoalkylalkoxysilan, Aminoalkylsilan und/oder Aminoalkoxysilan, insbesondere Aminoalkylalkoxysilan,
      und/oder, insbesondere und,
B) eine zweite Zusammensetzung, bestehend aus oder enthaltend
   b1) mindestens ein Alkylalkoxysilan und
   b2) mindestens ein Kohlenwasserstofflösungsmittel,
   b3) mindestens ein Alkohollösungsmittel,
   b4) mindestens ein Esterlösungsmittel und
   b5) mindestens ein Ketonlösungsmittel.

Besonders geeignet sind auch solche Ausführungsformen des erfindungsgemäßen Kit-of-parts, die gekennzeichnet sind durch
A) eine erste Zusammensetzung, bestehend aus oder enthaltend
   a0) Wasser,
   a1) mindestens ein Ketonlösungsmittel, insbesondere Aceton,
   a2) mindestens eine Carbonsäure mit 1 bis 10 Kohlenstoffatomen, insbesondere Ameisensäure,
   a3) mindestens ein Alkylalkoxysilan, insbesondere Isobutyltrimethoxysilan, und
   a4) mindestens ein, insbesondere in protonierter Form vorliegendes, Aminoalkylalkoxysilan, insbesondere protoniertes 3-Aminopropyltrimethoxysilan,
      und/oder, insbesondere und,
B) eine zweite Zusammensetzung, bestehend aus oder enthaltend
   b1) mindestens ein Alkylalkoxysilan, insbesondere Triethoxymethylsilan, und
   b2) mindestens ein Kohlenwasserstofflösungsmittel, insbesondere Toluol,
   b3) mindestens ein Alkohollösungsmittel, insbesondere Ethanol und/oder Isopropanol, und
   b4) mindestens ein Esterlösungsmittel, insbesondere Ethylacetat.

In einer besonders bevorzugten Ausführungsform liegt die Komponente a4) in der Zusammensetzung A) bedingt durch die gleichzeitige Anwesenheit der Carbonsäure a2), vorzugsweise Ameisensäure, in protonierter Form vor. Ohne an eine Theorie gebunden zu sein, wird gegenwärtig gemutmaßt, dass durch das Vorliegen der Komponente a4) in protonierter Form die Komponente a3), die üblicherweise nicht wasserlöslich ist, in der wässrigen ersten Zusammensetzung A) in Lösung vorliegt. Demgemäß werden besonders zufriedenstellende Resultate mit einem erfindungsgemäßen Kit-of-parts enthaltend eine erste Zusammensetzung A) erhalten, welche ein einphasiges System darstellt, d. h. ein wässriges System, welches jedenfalls temporär keine Entmischung zeigt.

Für die Herstellung der Zusammensetzung A) stellt man vorzugsweise zunächst eine Mischung aus der mindestens eine Carbonsäure mit 1 bis 10 Kohlenstoffatomen a2), insbesondere Ameisensäure, und Wasser her. Separat werden dann die Komponenten a1), a3) und a4) miteinander vermischt. Bevorzugt wird diese Mischung unter Rühren zu dem wässrigen System enthaltend die Komponente a2) gegeben. In einer zweckmäßigen Ausgestaltung liegt bei dieser Mischung der pH-Wert im Bereich von 3,0 bis 5,0 oder kleiner 5,0 oder wird auf einen solchen Wert eingestellt. Die auf diese Weise erhaltene Zusammensetzung A) ist vorzugsweise transparent.

Bau- bzw. Mauerwerke, die mit dem erfindungsgemäßen Kit-of-parts behandelt werden können, umfassen z.B. Keller- und Erdgeschosswände sowie Gebäudedecken, auch Zwischendecken.

Das Ketonlösungsmittel a1), gegebenenfalls auch b3) und/oder b4), ist vorzugsweise ausgewählt aus der Gruppe bestehend aus Aceton, Methylethylketon, Methylisobutylketon, Cyclohexanon und deren Mischungen. Insbesondere stellt die Komponente a1) ein Ketonlösungsmittel dar. Dies umfasst bevorzugt Aceton oder stellt Aceton dar.

Das Aminoalkylalkoxysilan a4) umfasst vorzugsweise mindestens ein Aminoalkyldialkoxysilan, ein Aminoalkyldiethoxysilan oder eine Mischung dieser Verbindungen oder besteht hieraus. In einer bevorzugten Variante des erfindungsgemäßen Bauwerkshydrophobierungs-Kit-of-parts, insbesondere Mauerwerkshydrophobierungs-Kit-of-parts, ist das Aminoalkylalkoxysilan a4) ausgewählt aus der Gruppe bestehend aus 3-Aminopropyltrimethoxysilan, 3-Aminopropyltriethoxysilan, 3-Aminopropylmethyldiethoxysilan, N-(2-Aminoethyl)-3-aminopropyltrimethoxysilan, 2-Aminopropyl-3-aminopropyltrimethoxysilan, 2-Aminopropyl-3-aminopropyltriethoxysilan, 2-Aminoethyl-2-aminoethyl-3-aminopropyltrimethoxysilan, 2-Aminoethyl-2-aminoethyl-3-aminopropyltriethoxysilan, N-(n-Butyl)-3-aminopropyltrimethoxysilan und deren Mischungen. Besonders bevorzugt wird auf 3-Aminopropyltriethoxysilan, 3-Aminopropylmethyldiethoxysilan und/oder 3-Aminopropyltrimethoxysilan sowie insbesondere auf 3-Aminopropyltrimethoxysilan zurückgegriffen.

Das Alkylalkoxysilan a3) und das Alkylalkoxysilan b1) können gemeinsam oder unabhängig voneinander eine trifunktionelle Silanverbindung darstellen oder aus einer Mischung enthaltend mindestens zwei trifunktionelle Silanverbindungen gebildet sein. Die Alkylalkoxysilane a3) und/oder b1) sind dabei insbesondere ausgewählt aus der Gruppe bestehend aus Methyltrimethoxysilan, Phenyltrimethoxysilan, Methyltriethoxysilan, Phenyltriethoxysilan, Isobutyltrimethoxysilan, Isobutyltriethoxysilan, Propyltrimethoxysilan, Propyltriethoxysilan, Ethyltrimethoxysilan, Ethyltriethoxysilan und deren Mischungen. Alternativ oder zusätzlich kann für die Alkylalkoxysilane a3) und/oder b1) zurückgegriffen werden auf mindestens eine difunktionelle Silanverbindung. Diese difunktionelle Silanverbindung ist bevorzugt ausgewählt aus der Gruppe bestehend aus Dimethyldimethoxysilan, Dimethyldiethoxysilan, Diethyldiethoxysilan, Diphenyldimethoxysilan und deren Mischungen. In einer weiteren besonders geeigneten Ausgestaltung können das Alkylalkoxysilan a3) und/oder das Alkylalkoxysilan b1), insbesondere das Alkylalkoxysilan b1), mindestens ein Methyltrialkoxysilan und/oder mindestens ein Dimethylalkoxysilan, insbesondere ein Methyltrialkoxysilan, z.B. Methyltrimethoxysilan und/oder Methyltriethoxysilan, umfassen oder hieraus bestehen.

Die mindestens eine Carbonsäure mit 1 bis 10 Kohlenstoffatomen a2) ist in besonders geeigneten Ausführungsformen ausgewählt aus der Gruppe bestehend aus Ameisensäure, Essigsäure, Propionsäure, Buttersäure, 2-Methyl-Buttersäure, Isovaleriansäure, Trimethylessigsäure, Glycolsäure, Milchsäure und deren Mischungen, Für die Komponente a2) wird bevorzugt auf Ameisensäure, Essigsäure und/oder Propionsäure, insbesondere auf Ameisensäure, zurückgegriffen.

Das mindestens eine Esterlösungsmittel b4), gegebenenfalls auch a1), kann bevorzugt ausgewählt werden aus der Gruppe bestehend aus Methylacetat, Ethylacetat, n-Butylacetat, Amylacetat und deren Mischungen. Als besonders geeignet für die erfindungsgemäßen Bauwerkshydrophobierungs-Kit-of-parts, insbesondere Mauerwerkshydrophobierungs-Kit-of-parts, hat sich als Komponente b4) Ethylacetat erwiesen.

Das mindestens eine Alkohollösungsmittel b3), gegebenenfalls auch a1), wird bevorzugt ausgewählt aus der Gruppe bestehend aus Methanol, Ethanol, Isopropanol, n-Butanol, Isobutanol, sec.-Butanol, Ethylenglycolmonomethylether, Ethylenglycolmonoethylether, Ethylenglycolmonoisopropyl-ether, Ethylenglycolmonobutylether und deren Mischungen. Als besonders geeignet haben sich unter den Alkohollösungsmitteln, insbesondere gemäß Komponente b3), Ethanol und/oder Isopropanol herausgestellt. Besonders bevorzugt wird als Komponente b3) eine Mischung aus Ethanol und Isopropanol eingesetzt.

Für das mindestens eine Kohlenwasserstofflösungsmittel b2) kann auf bei Raumtemperatur flüssige aromatische und/oder aliphatische Kohlenwasserstoffe zurückgegriffen werden und ist bevorzugt ausgewählt aus der Gruppe bestehend aus Toluol, Xylol, Cyclohexan, n-Hexan, Octan und deren Mischungen. Für die Komponente b2) greift man besonders bevorzugt auf Toluol zurück.

Während man in einer besonders bevorzugten Ausführungsform für das Alkylalkoxysilan a3) Isobutyltrimethoxysilan und/oder Isobutyltriethoxysilan, insbesondere Isobutyltrimethoxysilan, einsetzt, kommt, alternativ oder insbesondere gleichzeitig, in einer besonders bevorzugten Ausführungsform für das mindestens eine Alkylalkoxysilan b1) Triethoxymethylsilan zum Einsatz.

Dabei wird die Menge an Isopropanol bevorzugt größer als die Menge an Ethanol gewählt, bezogen auf den eingesetzten Volumenanteil.

Die der Erfindung zugrunde liegende Aufgabe wird besonders gut und zuverlässig auch durch solche erfindungsgemäßen Bauwerkshydrophobierungs-Kit-of-parts, insbesondere Mauerwerkshydrophobierungs-Kit-of-parts, gelöst, bei denen
die erste wässrige Zusammensetzung A)
- 0,5 bis 5,0 Gewichtsprozent, bevorzugt 0,75 bis 4,0 Gewichtsprozent und besonders bevorzugt 1,0 bis 3,0 Gewichtsprozent, des mindestens einen Ketonlösungsmittels, Alkohollösungsmittels und/oder Esterlösungsmittels, bevorzugt Ketonlösungsmittels, a1), insbesondere Aceton,
- 0,01 bis 1,0 Gewichtsprozent, bevorzugt 0,05 bis 0,75 Gewichtsprozent und besonders bevorzugt 0,1 bis 0,5 Gewichtsprozent, des mindestens einen Aminoalkylalkoxysilan a4), bevorzugt 3-Aminopropyltriethoxysilan, 3-Aminopropylmethyldiethoxy-silan und/oder 3-Aminopropyltrimethoxysilan, insbesondere 3-Aminopropyltrimethoxysilan,
- 0,01 bis 1,0 Gewichtsprozent, bevorzugt 0,05 bis 0,75 Gewichtsprozent und besonders bevorzugt 0,1 bis 0,5 Gewichtsprozent, des mindestens einen Alkylalkoxysilan a3), vorzugsweise Isobutyltrimethoxysilan und/oder Isobutyltriethoxysilan, insbesondere insbesondere Isobutyltrimethoxysilan,
- 0,001 bis 0,75 Gewichtsprozent, bevorzugt 0,005 bis 0,5 Gewichtsprozent und besonders bevorzugt 0,01 bis 0,25 Gewichtsprozent, der mindestens einen Carbonsäure a2) mit 1 bis 10 Kohlenstoffatomen, bevorzugt auf Ameisensäure, Essigsäure und/oder Propionsäure, insbesondere Ameisensäure, und/oder
- 80,0 bis 99,0 Gewichtsprozent, bevorzugt 90,0 bis 98,5 Gewichtsprozent und besonders bevorzugt 95,0 bis 98,0 Gewichtsprozent, Wasser a0),
jeweils bezogen auf das Gesamtgewicht der wässrigen Zusammensetzung A), enthält, wobei die die erste wässrige Zusammensetzung A) bildenden Komponenten stets 100 Gewichtsprozent ergeben. Die wässrige Zusammensetzung A) verfügt besonders bevorzugt über die Komponenten Ameisensäure, 3-Aminopropyl-trimethoxysilan und Isobutyltrimethoxysilan. Als geeignetes Wasser wird vorzugsweise auf vollentsalztes Wasser zurückgegriffen.

In einer weiteren besonders bevorzugten Ausgestaltung enthält die Zusammensetzung A), neben den Komponenten a0) bis a4), keine Zusätze an Tenside, insbesondere keine weiteren Zusatzstoffe.

Die der Erfindung zugrunde liegende Aufgabe wird des Weiteren besonders gut und zuverlässig auch durch solche erfindungsgemäßen Bauwerkshydrophobierungs-Kit-of-parts, insbesondere Mauerwerkshydrophobierungs-Kit-of-parts, gelöst, bei denen alternativ oder insbesondere gleichzeitig die zweite Zusammensetzung B)
- 30,0 bis 80,0 Gewichtsprozent bevorzugt 40,0 bis 70 Gewichtsprozent und besonders bevorzugt 45 bis 65 Gewichtsprozent, des mindestens einen Alkylalkoxysilan b1), bevorzugt Triethoxymethylsilan und/oder Trimethoxymethylsilan, insbesondere Triethoxymethylsilan,
- 1,0 bis 15,0 Gewichtsprozent, bevorzugt 1,5 bis 10,0 Gewichtsprozent und besonders bevorzugt 2,0 bis 7,0 Gewichtsprozent, des mindestens einen Esterlösungsmittels b4), insbesondere Ethylacetat,
- 20,0 bis 70,0 Gewichtsprozent, bevorzugt 25,0 bis 60,0 Gewichtsprozent und besonders bevorzugt 30,0 bis 50,0 Gewichtsprozent, des mindestens einen Alkohollösungsmittels b3), bevorzugt Ethanol und/oder Isopropanol, insbesondere Ethanol und Isopropanol, und/oder
- 0,01 bis 1,0 Gewichtsprozent, bevorzugt 0,05 bis 0,75 Gewichtsprozent und besonders bevorzugt 0,1 bis 0,5 Gewichtsprozent, des mindestens einen Kohlenwasserstofflösungsmittel b2), insbesondere Toluol,
jeweils bezogen auf das Gesamtgewicht der wässrigen Zusammensetzung B), enthält, wobei die die erste wässrige Zusammensetzung B) bildenden Komponenten stets 100 Gewichtsprozent ergeben.

Die Zusammensetzungen A) und B) sowie die aus A) und B) erhaltene Mischung zeichnen sich vorzugsweise durch eine wasserähnliche bzw. im Wesentlichen wassergleiche Viskosität aus (bestimmt bei 22 °C). Die Komponente B) ist vorzugsweise im Wesentlichen wasserfrei.

Unter den erfindungsgemäßen Kit-of-parts sind auch solche besonders geeignet, bei denen die zweite Zusammensetzung B), jeweils bezogen auf das Gesamtgewicht der wässrigen Zusammensetzung B), 20,0 bis 70,0 Gewichtsprozent, bevorzugt 25,0 bis 60,0 Gewichtsprozent und besonders bevorzugt 30,0 bis 50,0 Gewichtsprozent, Isopropanol und 0,1 bis 10,0 Gewichtsprozent, bevorzugt 0,2 bis 5,0 Gewichtsprozent und besonders bevorzugt 0,5 bis 3,0 Gewichtsprozent, Ethanol enthalten.

Bei den erfindungsgemäßen Kit-of-parts stellen die erste wässrige Zusammensetzung A) und/oder die zweite Zusammensetzung B) bevorzugt Einphasensysteme dar.

Das Volumenverhältnis der Zusammensetzungen A) zu B) liegt bevorzugt im Bereich von 2:1 bis 50:1, bevorzugt im Bereich von 5:1 bis 40:1 und besonders bevorzugt im Bereich von 8:1 bis 20:1.

Ferner wird die der Erfindung zugrunde liegende Aufgabe auch durch solche Bauwerkshydrophobierungs-Kit-of-parts, insbesondere Mauerwerkshydrophobierungs-Kit-of-parts, gelöst, bei denen die Zusammensetzung A) erhältlich ist durch
i) Herstellung einer Mischung aus der mindestens einen Carbonsäure a2) mit 1 bis 10 Kohlenstoffatomen, bevorzugt Propionsäure, Essigsäure und/oder, insbesondere Ameisensäure, insbesondere und Wasser a0),
ii) Herstellung einer Mischung aus dem mindestens einen Ketonlösungsmittel, Alkohollösungsmittel und/oder Esterlösungsmittel, bevorzugt Ketonlösungsmittel a1), insbesondere Aceton, dem mindestens einen Aminoalkylalkoxysilan a4), bevorzugt 3-Aminopropyltriethoxysilan, 3-Aminopropylmethyldiethoxysilan und/oder 3-Aminopropyltrimethoxysilan sowie insbesondere 3-Aminopropyltrimethoxysilan, und dem mindestens einen Alkylalkoxysilan a3), bevorzugt Isobutyltrimethoxysilan und/oder Isobutyltriethoxysilan, insbesondere Isobutyltrimethoxysilan,
iii) Vermischen der gemäß Schritt i) und Schritt ii) erhaltenen Zusammensetzungen.

Hierbei kann das Vermischen gemäß Schritt iii) die Zugabe der gemäß Schritt ii) erhaltenen Zusammensetzung zu der gemäß Schritt i) erhaltenen Zusammensetzung umfassen. Das Vermischen wird hierbei vorzugsweise mittels Rührens vorgenommen, wobei in einer besonders zweckmäßigen Ausgestaltung die Vermischung derart vorgenommen wird, dass ölige Abscheidungen auf der Oberfläche nicht auftreten.

Darüber hinaus kann die Zusammensetzung A) in einer erfindungsgemäßen Ausführungsform einen pH-Wert im Bereich von 3,0 bis 5,0 oder kleiner 5,0, bevorzugt im Bereich von 3,5 bis 4,9 und besonders bevorzugt im Bereich von 3,7 bis 4,8, aufweisen oder auf einen pH-Wert im Bereich von 3,0 bis 5,0 oder kleiner 5,0, bevorzugt im Bereich von 3,5 bis 4,9 bzw. im Bereich von 3,7 bis 4,8, eingestellt werden.

Der erfindungsgemäße Kit-of-parts ist besonders geeignet für die Hydrophobierung von Bauwerken, insbesondere Mauerwerk, besonders bevorzugt feuchtem Mauerwerk, für die Beseitigung von Feuchteschäden in Bauwerken, insbesondere in einem Mauerwerk, für die Feuchteabdichtung von Bauwerken, insbesondere Mauerwerk, und/oder für die Ausbildung einer, insbesondere im Wesentlichen horizontalen, Feuchtesperre in Bauwerken, insbesondere in einem Mauerwerk.

Die der Erfindung zugrunde liegende Aufgabe wird auch durch ein wässriges Bauwerkshydrophobierungsmittel, insbesondere wässriges Mauerwerkshydrophobierungsmittel, gelöst, erhalten oder erhältlich durch Vermengen der Zusammensetzung A) und der Zusammensetzung B) der erfindungsgemäßen Kit-of-parts.

Dieses Bau- bzw. Mauerwerkshydrophobierungsmittel weist bevorzugt einen pH-Wert im Bereich von 3,0 bis 5,0 oder kleiner 5,0, bevorzugt im Bereich von 3,5 bis 4,9 und besonders bevorzugt im Bereich von 3,7 bis 4,8, auf oder wird vorzugsweise auf einen pH-Wert im Bereich von 3,0 bis 5,0 oder kleiner 5,0, bevorzugt im Bereich von 3,5 bis 4,9, eingestellt.

Das erfindungsgemäße Bau- bzw. Mauerwerkshydrophobierungsmittel wird vorzugsweise im Wesentlichen unmittelbar nach der Herstellung aus den Komponenten A) und B) des erfindungsgemäßen Kit-of-parts über Bohrlöcher und mit Hilfe von in diese eingeführte Kanülen in das feuchte Mauerwerk injiziert. Das erfindungsgemäße Bau- bzw. Mauerwerkshydrophobierungsmittel zeichnet sich durch eine überraschende Lagerfähigkeit aus, beispielsweise über einen Zeitraum von bis zu einem Tag, vorzugsweise von bis zu 12 Stunden. Für viele Anwendungen wird empfohlen, das erfindungsgemäße Mittel vor Ablauf einer Lagerzeit von acht Stunden nach Vermischen der Komponenten A) und B) einzusetzen. Die genannten Injektionstechniken sind dem Fachmann bekannt. Die Bohrlöcher sind in dem Bau- bzw. Mauerwerk zweckmäßigerweise nicht durchgehend anzubringen, sondern durchstoßen zum Beispiel eine Wand nicht vollständig. Diese Bohrlöcher werden in einer Weise ausgeführt, dass Kanülen bzw. sogenannte Diffusoren ohne weiteres eingeführt werden können. Durch Verbinden dieser Kanülen bzw. Diffusoren mit in relativ erhöhter Position angeordneten Flüssigkeitsbehältern mittels Schläuchen oder Rohren kann das flüssige erfindungsgemäße Bau- bzw. Mauerwerkshydrophobierungsmittel in ein Bauwerk bzw. Mauerwerk einsickern. Die Anzahl und Anordnung der Bohrlöcher hängen von den Gegebenheiten des jeweiligen Bauwerks bzw. des jeweiligen Mauerwerks ab. Häufig reicht es schon aus, wenn die einzelnen Bohrlöcher in einem Abstand von etwa 10 bis 20 cm in einer im Wesentlichen horizontalen Reihe gesetzt werden. Aufgrund von Kapillarwirkung findet zunächst eine gleichförmige Verteilung des wässrigen Systems statt. Obwohl bei Verwendung der erfindungsgemäßen Kit-of-parts beträchtliche Mengen an Wasser in das Mauerwerk zusätzlich eingetragen werden, gelingt die Ausbildung eines feuchtefreien Areals, das ebenfalls als horizontale Feuchtesperre dient. Selbstverständlich kann über die Art der Einbringung vermittels der Bohrlöcher auch eine vertikale oder eine diagonale oder eine großvolumige Feuchtesperre ausgebildet werden.

Die der Erfindung zugrunde liegende Aufgabe wird ferner gelöst durch eine wässrige Zusammensetzung, enthaltend
- 3,0 bis 8,0 Gewichtsprozent, bevorzugt 4,0 bis 7,0 Gewichtsprozent und besonders bevorzugt 5,0 bis 6,0 Gewichtsprozent, des mindestens einen Ketonlösungsmittels, Alkohollösungsmittels und/oder Esterlösungsmittels, bevorzugt Ketonlösungsmittels, a1), insbesondere Aceton,
- 0,1 bis 1,2 Gewichtsprozent, bevorzugt 0,3 bis 1,0 Gewichtsprozent und besonders bevorzugt 0,5 bis 0,8 Gewichtsprozent, des mindestens einen Aminoalkylalkoxysilan a4), bevorzugt 3-Aminopropyltriethoxysilan, 3-Aminopropylmethyldiethoxysilan und/oder 3-Aminopropyltrimethoxysilan, insbesondere 3-Aminopropyltrimethoxysilan,
- 0,1 bis 1,2 Gewichtsprozent, bevorzugt 0,3 bis 1,0 Gewichtsprozent und besonders bevorzugt 0,5 bis 0,8 Gewichtsprozent, des mindestens einen Alkylalkoxysilan a3), bevorzugt Isobutyltrimethoxysilan und/oder Isobutyltriethoxysilan, insbesondere Isobutyltrimethoxysilan,
- 0,01 bis 0,75 Gewichtsprozent, bevorzugt 0,05 bis 0,5 Gewichtsprozent und besonders bevorzugt 0,1 bis 0,25 Gewichtsprozent, der mindestens einen Carbonsäure a2) mit 1 bis 10 Kohlenstoffatomen, bevorzugt Ameisensäure, Essigsäure und/oder Propionsäure, insbesondere Ameisensäure, und
- 88,85 bis 96,79 Gewichtsprozent, bevorzugt 90,5 bis 95,35 Gewichtsprozent und besonders bevorzugt 92,15 bis 93,9 Gewichtsprozent, Wasser,
jeweils bezogen auf das Gesamtgewicht der wässrigen Zusammensetzung, wobei die die wässrige Zusammensetzung bildenden Komponenten stets 100 Gewichtsprozent ergeben.

Diese erfindungsgemäße wässrige Zusammensetzung kann insbesondere auch als Konzentrat für die Herstellung der Zusammensetzung A) des erfindungsgemäßen Kit-of-parts eingesetzt werden. Hierdurch werden Transport und Handhabung wesentlich erleichtert.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Bauwerkshydrophobierungs-Kit-of-parts, insbesondere Mauerwerkshydrophobierungs-Kit-of-parts, mit
A) einer ersten Zusammensetzung, bestehend aus oder enthaltend
a0) Wasser,
a1) mindestens ein Ketonlösungsmittel, Alkohollösungsmittel und/oder Esterlö -sungsmittel, insbesondere Ketonlösungsmittel, und
a2) mindestens eine Carbonsäure mit 1 bis 10 Kohlenstoffatomen sowie
a3) mindestens ein Alkylalkoxysilan und
a4) mindestens ein Aminoalkylalkoxysilan, Aminoalkylsilan und/oder Aminoalkoxysilan, insbesondere Aminoalkylalkoxysilan, und
B) einer zweiten Zusammensetzung, bestehend aus oder enthaltend
b1) mindestens ein Alkylalkoxysilan und
b2) mindestens ein Kohlenwasserstofflösungsmittel sowie
b3) mindestens ein Alkohollösungsmittel und/oder
b4) mindestens ein Esterlösungsmittel und/oder
b5) mindestens ein Ketonlösungsmittel.

2. Kit-of-parts nach Anspruch 1, **dadurch gekennzeichnet, dass**
das Ketonlösungsmittel a1) ausgewählt ist aus der Gruppe bestehend aus Aceton, Methylethylketon, Methylisobutylketon, Cyclohexanon und deren Mischungen, insbesondere Aceton darstellt oder umfasst,
und/oder dass
das Aminoalkylalkoxysilan a4) mindestens ein Aminoalkyldialkoxysilan und/oder ein Aminoalkyldiethoxysilan umfasst und/oder ausgewählt ist aus der Gruppe bestehend aus 3-Aminopropyltrimethoxysilan, 3-Aminopropyltriethoxysilan, 3-Aminopropylmethyldiethoxysilan, N-(2-Aminoethyl)-3-aminopropyltrimethoxysilan, 2-Aminopropyl-3-aminopropyltrimethoxysilan, 2-Aminopropyl -3 -aminopropyltriethoxysilan, 2-Aminoethyl-2-aminoethyl-3-aminopropyltrimethoxysilan, 2-Aminoethyl-2-aminoethyl-3-aminopropyltriethoxysilan, N-(n-Butyl)-3-aminopropyltrimethoxysilan und deren Mischungen, insbesondere 3-Aminopropyltrimethoxysilan darstellt oder umfasst, und/oder dass
das Alkylalkoxysilan a3) und/oder das Alkylalkoxysilan b1) mindestens eine trifunktionelle Silanverbindung, insbesondere ausgewählt aus der Gruppe bestehend aus Methyltrimethoxysilan, Phenyltrimethoxysilan, Methyltriethoxysilan, Phenyltriethoxysilan, Isobutyltrimethoxysilan, Isobutyltriethoxysilan, Propyltrimethoxysilan, Propyltriethoxysilan, Ethyltrimethoxysilan, Ethyltriethoxysilan und deren Mischungen, und/oder mindestens eine difunktionelle Silanverbindung, insbesondere ausgewählt aus der Gruppe bestehend aus Dimethyldimethoxysilan, Dimethyldietlioxysilan, Diethyldiethoxysilan, Diphenyldimethoxysilan und deren Mischungen, umfasst, und/oder dass
die mindestens eine Carbonsäure mit 1 bis 10 Kohlenstoffatomen a2) ausgewählt ist aus der Gruppe bestehend aus Ameisensäure, Essigsäure, Propionsäure, Buttersäure, 2-Methyl-Buttersäure, Isovaleriansäure, Trimethylessigsäure, Glycolsäure, Milchsäure und deren Mischungen, insbesondere Ameisensäure darstellt oder umfasst,
und/oder dass
das mindestens eine Esterlösungsmittel b4) ausgewählt ist aus der Gruppe bestehend aus Methylacetat, Ethylacetat, n-Butylacetat, Amylacetat und deren Mischungen, insbesondere Ethylacetat umfasst oder darstellt,
und/oder dass
das mindestens eine Alkohollösungsmittel b3) ausgewählt ist aus der Gruppe bestehend aus Methanol, Ethanol, Isopropanol, n-Butanol, Isobutanol, sec.-Butanol, Ethylenglycolmonomethylether, Ethylenglycolmonoethylether, Ethylenglycolmonoisopropylether, Ethylenglycolmonobutylether und deren Mischungen, insbesondere Ethanol und/oder Isopropanol darstellt oder umfasst,
und/oder dass
das mindestens eine Kohlenwasserstofflösungsmittel b2) ausgewählt ist aus der Gruppe bestehend aus Toluol, Xylol, Cyclohexan, n-Hexan, Octan und deren Mischungen, insbesondere Toluol umfasst oder darstellt.

3. Kit-of-parts nach ein Anspruch 1 oder 2, **dadurch gekennzeichnet, dass**
das Alkylalkoxysilan a3) Isobutyltrimethoxysilan umfasst oder darstellt und/oder dass das mindestens eine Alkylalkoxysilan b1) Triethoxymethylsilan umfasst oder darstellt.

4. Kit-of-parts nach einem der vorangehenden Ansprüche, **dadurch gekennzeichnet,**
**dass**
das mindestens eine Alkohollösungsmittel b3) Ethanol und Isopropanol darstellt und insbesondere dass die Menge an Isopropanol größer ist als die Menge an Ethanol, bezogen auf den eingesetzten Volumenanteil.

5. Kit-of-parts nach einem der vorangehenden Ansprüche, **dadurch gekennzeichnet, dass**
die erste wässrige Zusammensetzung A)
- 0,5 bis 5,0 Gewichtsprozent, bevorzugt 0,75 bis 4,0 Gewichtsprozent und besonders bevorzugt 1,0 bis 3,0 Gewichtsprozent, des mindestens einen Ketonlösungsmittels a1), insbesondere Aceton,
- 0,01 bis 1,0 Gewichtsprozent, bevorzugt 0,05 bis 0,75 Gewichtsprozent und besonders bevorzugt 0,1 bis 0,5 Gewichtsprozent, des mindestens einen Aminoalkylalkoxysilan a4), insbesondere 3-Aminopropyltrimethoxysilan,
- 0,01 bis 1,0 Gewichtsprozent, bevorzugt 0,05 bis 0,75 Gewichtsprozent und besonders bevorzugt 0,1 bis 0,5 Gewichtsprozent, des mindestens einen Alkylalkoxysilan a3), insbesondere Isobutyltrimethoxysilan,
- 0,001 bis 0,75 Gewichtsprozent, bevorzugt 0,005 bis 0,5 Gewichtsprozent und besonders bevorzugt 0,01 bis 0,25 Gewichtsprozent, der mindestens einen Carbonsäure a2) mit 1 bis 10 Kohlenstoffatomen, insbesondere Ameisensäure, und/oder
- 80,0 bis 99,0 Gewichtsprozent, bevorzugt 90,0 bis 98,5 Gewichtsprozent und besonders bevorzugt 95,0 bis 98,0 Gewichtsprozent, Wasser a0),
jeweils bezogen auf das Gesamtgewicht der wässrigen Zusammensetzung A), enthält, wobei die die erste wässrige Zusammensetzung A) bildenden Komponenten stets 100 Gewichtsprozent ergeben,
und/oder, insbesondere und, dass
die zweite Zusammensetzung B)
- 30,0 bis 80,0 Gewichtsprozent bevorzugt 40,0 bis 70 Gewichtsprozent und besonders bevorzugt 45 bis 65 Gewichtsprozent, des mindestens einen Alkylalkoxysilan b1), insbesondere Triethoxymethylsilan,
- 1,0 bis 15,0 Gewichtsprozent, bevorzugt 1,5 bis 10,0 Gewichtsprozent und besonders bevorzugt 2,0 bis 7,0 Gewichtsprozent, des mindestens einen Esterlösungsmittel b4), insbesondere Ethylacetat,
- 20,0 bis 70,0 Gewichtsprozent, bevorzugt 25,0 bis 60,0 Gewichtsprozent und besonders bevorzugt 30,0 bis 50,0 Gewichtsprozent, des mindestens einen Alkohollösungsmittels b3), insbesondere Ethanol und/oder Isopropanol, und/oder
- 0,01 bis 1,0 Gewichtsprozent, bevorzugt 0,05 bis 0,75 Gewichtsprozent und besonders bevorzugt 0,1 bis 0,5 Gewichtsprozent, des mindestens einen Kohlenwasserstofflösungsmittel b2), insbesondere Toluol,
jeweils bezogen auf das Gesamtgewicht der Zusammensetzung B), enthält, wobei die die zweite Zusammensetzung B) bildenden Komponenten stets 100 Gewichtsprozent ergeben.

6. Kit-of-parts nach einem der vorangehenden Ansprüche, **dadurch gekennzeichnet, dass**
die zweite Zusammensetzung B) 20,0 bis 70,0 Gewichtsprozent, bevorzugt 25,0 bis 60,0 Gewichtsprozent und besonders bevorzugt 30,0 bis 50,0 Gewichtsprozent, Isopropanol und 0,1 bis 10,0 Gewichtsprozent, bevorzugt 0,2 bis 5,0 Gewichtsprozent und besonders bevorzugt 0,5 bis 3,0 Gewichtsprozent, Ethanol enthält.

7. Kit-of-parts nach einem der vorangehenden Ansprüche, **dadurch gekennzeichnet, dass**
die erste Zusammensetzung A) und/oder die zweite Zusammensetzung B) Einphasensysteme darstellen.

8. Kit-of-parts nach einem der vorangehenden Ansprüche, **dadurch gekennzeichnet, dass**
das Volumenverhältnis der Zusammensetzungen A) zu B) im Bereich von 2:1 bis 50:1, bevorzugt im Bereich von 5:1 bis 40:1 und besonders bevorzugt im Bereich von 8:1 bis 20:1, liegt.

9. Kit-of-parts nach einem der vorangehenden Ansprüche, **gekennzeichnet durch**
A) eine erste Zusammensetzung, bestehend aus oder enthaltend
a0) Wasser,
a1) mindestens ein Ketonlösungsmittel,
a2) mindestens eine Carbonsäure mit 1 bis 10 Kohlenstoffatomen,
a3) mindestens ein Alkylalkoxysilan,
a4) mindestens ein, insbesondere in protonierter Form vorliegendes, Aminoalkylalkoxysilan, Aminoalkylsilan und/oder Aminoalkoxysilan, insbesondere Aminoalkylalkoxysilan,
und/oder, insbesondere und,
B) eine zweite Zusammensetzung, bestehend aus oder enthaltend
b1) mindestens ein Alkylalkoxysilan und
b2) mindestens ein Kohlenwasserstofflösungsmittel,
b3) mindestens ein Alkohollösungsmittel und
b4) mindestens ein Esterlösungsmittel.

10. Kit-of-parts nach einem der vorangehenden Ansprüche, **dadurch gekennzeichnet, dass**
die Zusammensetzung A) erhältlich ist durch
i) Herstellung einer Mischung aus der mindestens einen Carbonsäure a2) mit 1 bis 10 Kohlenstoffatomen, insbesondere Ameisensäure, und Wasser,
ii) Herstellung einer Mischung aus dem mindestens einen Ketonlösungsmittel, Alkohollösungsmittel und/oder Esterlösungsmittel, bevorzugt Ketonlösungsmittel, a1), insbesondere Aceton, dem mindestens einen Aminoalkylalkoxysilan a4) und dem mindestens einen Alkylalkoxysilan a3),
iii) Vermischen der gemäß Schritt i) und Schritt ii) erhaltenen Zusammensetzungen.

11. Kit-of-parts nach Anspruch 10, **dadurch gekennzeichnet, dass** das Vermischen gemäß Schritt iii) die Zugabe der gemäß Schritt ii) erhaltenen Zusammensetzung zu der gemäß Schritt i) erhaltenen Zusammensetzung umfasst.

12. Kit-of-parts nach einem der vorangehenden Ansprüche, **dadurch gekennzeichnet, dass**
die Zusammensetzung A) einen pH-Wert im Bereich von 3,0 bis 5,0 oder kleiner 5,0, bevorzugt im Bereich von 3,5 bis 4,9 und besonders bevorzugt im Bereich von 3,7 bis 4,8, aufweist oder auf einen pH-Wert im Bereich von 3,0 bis 5,0 oder kleiner 5,0, bevorzugt im Bereich von 3,5 bis 4,9, eingestellt ist.

13. Verwendung des Kit-of-parts gemäß einem der vorangehenden Ansprüche für die Hydrophobierung von einem Bauwerk, bevorzugt Mauerwerk, besonders bevorzugt feuchtem Mauerwerk, und/oder für die Beseitigung von Feuchteschäden in einem Bauwerk, insbesondere Mauerwerk; und/oder für die Feuchteabdichtung von Bauwerken, insbesondere Mauerwerk, und/oder für die Ausbildung einer, insbesondere im Wesentlichen horizontalen, Feuchtesperre in Bauwerken, insbesondere in einem Mauerwerk.

14. Flüssiges Bauwerkshydrophobierungsmittel, insbesondere Mauerwerkshydrophobierungsmittel, erhalten oder erhältlich durch
Vermengen der Zusammensetzung A) und der Zusammensetzung B) gemäß einem der Ansprüche 1 bis 12.

15. Bauwerkshydrophobierungsmittel nach Anspruch 14, **dadurch gekennzeichnet**, das dieses einen pH-Wert im Bereich von 3,0 bis 5,0 oder kleiner 5,0, bevorzugt im Bereich von 3,5 bis 4,9 und besonders bevorzugt im Bereich von 3,7 bis 4,8, aufweist oder auf einen pH-Wert im Bereich von 3,0 bis 5,0 oder kleiner 5,0, bevorzugt im Bereich von 3,5 bis 4,9, eingestellt ist.

16. Wässrige Zusammensetzung, bestehend aus oder enthaltend 3,0 bis 8,0 Gewichtsprozent, bevorzugt 4,0 bis 7,0 Gewichtsprozent und besonders bevorzugt 5,0 bis 6,0 Gewichtsprozent, mindestens ein Ketonlösungsmittel a1), insbesondere Aceton,
- 0,1 bis 1,2 Gewichtsprozent, bevorzugt 0,3 bis 1,0 Gewichtsprozent und besonders bevorzugt 0,5 bis 0,8 Gewichtsprozent, mindestens ein Aminoalkylalkoxysilan a4), insbesondere 3-Aminopropyltrimethoxysilan,
- 0,1 bis 1,2 Gewichtsprozent, bevorzugt 0,3 bis 1,0 Gewichtsprozent und besonders bevorzugt 0,5 bis 0,8 Gewichtsprozent, mindestens ein Alkylalkoxysilan a3), insbesondere Isobutyltrimethoxysilan,
- 0,01 bis 0,75 Gewichtsprozent, bevorzugt 0,05 bis 0,5 Gewichtsprozent und besonders bevorzugt 0,1 bis 0,25 Gewichtsprozent, mindestens eine Carbonsäure a2) mit 1 bis 10 Kohlenstoffatomen, insbesondere Ameisensäure, und,
- 88,85 bis 96,79 Gewichtsprozent, bevorzugt 90,5 bis 95,35 Gewichtsprozent und besonders bevorzugt 92,15 bis 93,9 Gewichtsprozent, Wasser,
jeweils bezogen auf das Gesamtgewicht der wässrigen Zusammensetzung, wobei die die wässrige Zusammensetzung bildenden Komponenten stets 100 Gewichtsprozent ergeben.

17. Verwendung der wässrigen Zusammensetzung gemäß Anspruch 16 als Konzentrat für die Herstellung der Zusammensetzung A) gemäß einem der Ansprüche 1 bis 12.

## Claims

1. A building structure hydrophobization kit of parts, in particular masonry hydrophobization kit of parts, comprising
A) a first composition, consisting of or containing
a0) water,
a1) at least one ketone solvent, alcohol solvent and/or ester solvent, in particular ketone solvent, and
a2) at least one carboxylic acid having 1 to 10 carbon atoms and
a3) at least one alkyl alkoxysilane and
a4) at least one aminoalkyl alkoxysilane, aminoalkyl silane and/or amino alkoxysilane, in particular aminoalkyl alkoxysilane,
and
B) a second composition, consisting of or containing
b1) at least one alkyl alkoxysilane and
b2) at least one hydrocarbon solvent and
b3) at least one alcohol solvent and/or
b4) at least one ester solvent and/or
b5) at least one ketone solvent.

2. The kit of parts according to Claim 1, **characterized in that**
the ketone solvent a1) is selected from the group consisting of acetone, methyl ethyl ketone, methyl isobutyl ketone, cyclohexanone and mixtures thereof, in particular is or contains acetone,
and/or **in that**
the aminoalkyl alkoxysilane a4) contains an aminoalkyl dialkoxysilane and/or an aminoalkyl diethoxysilane and/or is selected from the group consisting of 3-aminopropyltrimethoxysilane, 3-aminopropyltriethoxysilane, 3-aminopropyl methyldiethoxysilane, N-(2-aminoethyl)-3-aminopropyltrimethoxysilane, 2-aminopropyl-3-aminopropyltrimethoxysilane, 2-aminopropyl-3-aminopropyltriethoxysilane, 2-aminoethyl-2-aminoethyl-3-aminopropyltrimethoxysilane, 2-aminoethyl-2-aminoethyl-3-aminopropyltriethoxysilane, N-(n-butyl)-3-aminopropyltrimethoxysilane and mixtures thereof, in particular is or contains 3-aminopropyltrimethoxysilane,
and/or **in that**
the alkyl alkoxysilane a3) and/or the alkyl alkoxysilane b1) contains at least one trifunctional silane compound, in particular selected from the group consisting of methyltrimethoxysilane, phenyltrimethoxysilane, methyltriethoxysilane, phenyltriethoxysilane, isobutyltrimethoxysilane, isobutyltriethoxysilane, propyltrimethoxysilane, propyltriethoxysilane, ethyltrimethoxysilane, ethyltriethoxysilane and mixtures thereof, and/or at least one difunctional silane compound, in particular selected from the group consisting of dimethyldimethoxysilane, dimethyldiethoxysilane, diethyldiethoxysilane, diphenyldimethoxysilane and mixtures thereof,
and/or **in that**
the at least one carboxylic acid having 1 to 10 carbon atoms a2) is selected from the group consisting of formic acid, acetic acid, propionic acid, butyric acid, 2-methyl butyric acid, isovaleric acid, trimethyl acetic acid, glycolic acid, lactic acid and mixtures thereof, in particular is or contains formic acid,
and/or **in that**
the at least one ester solvent b4) is selected from the group consisting of methyl acetate, ethyl acetate, n-butyl acetate, amyl acetate and mixtures thereof, in particular is or contains ethyl acetate,
and/or **in that**
the at least one alcohol solvent b3) is selected from the group consisting of methanol, ethanol, isopropanol, n-butanol, isobutanol, sec-butanol, ethylene glycol monomethyl ether, ethylene glycol monoethyl ether, ethylene glycol monoisopropyl ether, ethylene glycol monobutyl ether and mixtures thereof, in particular is or contains ethanol and/or isopropanol,
and/or **in that**
the at least one hydrocarbon solvent b2) is selected from the group consisting of toluene, xylene, cyclohexane, n-hexane, octane and mixtures thereof, in particular is or contains toluene.

3. The kit of parts according to Claim 1 or 2, **characterized in that** the alkyl alkoxysilane a3) is or contains isobutyltrimethoxysilane and/or in that the at least one alkyl alkoxysilane b1) is or contains triethoxymethylsilane.

4. The kit of parts according to any one of the preceding claims, **characterized in that** the at least one alcohol solvent b3) contains ethanol and isopropanol, and in particular **in that** the quantity of isopropanol is greater than the quantity of ethanol, based on the volume fraction used.

5. The kit of parts according to any one of the preceding claims, **characterized in that** the first aqueous composition A) contains
- 0.5 to 5.0 wt.%, preferably 0.75 to 4.0 wt.% and particularly preferably 1.0 to 3.0 wt.%, of the at least one ketone solvent a1), in particular acetone,
- 0.01 to 1.0 wt.%, preferably 0.05 to 0.75 wt.% and particularly preferably 0.1 to 0.5 wt.%, of the at least one aminoalkyl alkoxysilane a4), in particular 3-aminopropyltrimethoxysilane,
- 0.01 to 1.0 wt.%, preferably 0.05 to 0.75 wt.% and particularly preferably 0.1 to 0.5 wt.%, of the at least one alkyl alkoxysilane a3), in particular isobutyltrimethoxysilane,
- 0.001 to 0.75 wt.%, preferably 0.005 to 0.5 wt.% and particularly preferably 0.01 to 0.25 wt.%, of the at least one carboxylic acid a2) having 1 to 10 carbon atoms, in particular formic acid, and/or
- 80.0 to 99.0 wt.%, preferably 90.0 to 98.5 wt.% and particularly preferably 95.0 to 98.0 wt.%, water a0),
in each case based on the total weight of the aqueous composition A), the components forming the first aqueous composition A) always amounting to 100 wt.%,
and/or, in particular and, **in that**
the second composition B) contains
- 30.0 to 80.0 wt.%, preferably 40.0 to 70 wt.% and particularly preferably 45 to 65 wt.%, of the at least one alkyl alkoxysilane b1), in particular triethoxymethylsilane,
- 1.0 to 15.0 wt.%, preferably 1.5 to 10.0 wt.% and particularly preferably 2.0 to 7.0 wt.%, of the at least one ester solvent b4), in particular ethyl acetate,
- 20.0 to 70.0 wt.%, preferably 25.0 to 60.0 wt.% and particularly preferably 30.0 to 50.0 wt.%, of the at least one alcohol solvent b3), in particular ethanol and/or isopropanol, and/or
- 0.01 to 1.0 wt.%, preferably 0.05 to 0.75 wt.% and particularly preferably 0.1 to 0.5 wt.%, of the at least one hydrocarbon solvent b2), in particular toluene,
in each case based on the total weight of the aqueous composition B), the components forming the second aqueous composition B) always amounting to 100 wt.%.

6. The kit of parts according to any one of the preceding claims, **characterized in that** the second composition B) contains 20.0 to 70.0 wt.%, preferably 25.0 to 60.0 wt.% and particularly preferably 30.0 to 50.0 wt.%, isopropanol and 0.1 to 10.0 wt.%, preferably 0.2 to 5.0 wt.% and particularly preferably 0.5 to 3.0 wt.%, ethanol.

7. The kit of parts according to any one of the preceding claims, **characterized in that** the first composition A) and/or the second composition B) are single-phase systems.

8. The kit of parts according to any one of the preceding claims, **characterized in that** the volume ratio of the compositions A) to B) is in the range of from 2:1 to 50:1, preferably in the range of from 5:1 to 40:1 and particularly preferably in the range of from 8:1 to 20:1.

9. The kit of parts according to any one of the preceding claims, **characterized by**
A) a first composition, consisting of or containing
a0) water,
a1) at least one ketone solvent,
a2) at least one carboxylic acid having 1 to 10 carbon atoms,
a3) at least one alkyl alkoxysilane,
a4) at least one aminoalkyl alkoxysilane, aminoalkyl silane and/or amino
alkoxysilane, in particular aminoalkyl alkoxysilane, in particular in protonated form,
and/or, in particular and,
B) a second composition, consisting of or containing
b1) at least one alkyl alkoxysilane and
b2) at least one hydrocarbon solvent,
b3) at least one alcohol solvent and
b4) at least one ester solvent.

10. The kit of parts according to any one of the preceding claims, **characterized in that** the composition A) is obtainable by
i) preparing a mixture of the at least one carboxylic acid a2) having 1 to 10 carbon atoms, in particular formic acid, and water,
ii) preparing a mixture of the at least one ketone solvent, alcohol solvent and/or ester solvent, preferably ketone solvent a1), in particular acetone, the at least one aminoalkyl alkoxysilane a4) and the at least one alkyl alkoxysilane a3),
iii) mixing together the compositions obtained according to step i) and step ii).

11. The kit of parts according to Claim 10, **characterized in that** the mixing according to step iii) includes the addition of the composition obtained according to step ii) to the composition obtained according to step i).

12. The kit of parts according to any one of the preceding claims, **characterized in that** the composition A) has a pH in the range of from 3.0 to 5.0 or less than 5.0, preferably in the range of from 3.5 to 4.9, and particularly preferably in the range of from 2.7 to 4.8, or is set to a pH in the range of from 3.0 to 5.0 or less than 5.0, preferably in the range of from 3.5 to 4.9.

13. A use of the kit of parts according to any one of the preceding claims for the hydrophobization of a building structure, preferably masonry, particularly preferably moist masonry, and/or for remedying moisture damage in a building structure, in particular masonry; and/or for sealing building structures, in particular masonry, against moisture, and/or for forming an in particular substantially horizontal moisture barrier in building structures, in particular in masonry.

14. A liquid building structure hydrophobization agent, in particular masonry hydrophobization agent,
which is obtained or obtainable by
mixing the composition A) and the composition B) according to any one of claims 1 to 12.

15. The building structure hydrophobization agent according to Claim 14, **characterized in that**
it has a pH in the range of from 3.0 to 5.0 or less than 5.0, preferably in the range of from 3.5 to 4.9, and particularly preferably in the range of from 3.7 to 4.8, or is set to a pH in the range of from 3.0 to 5.0 or less than 5.0, preferably in the range of from 3.5 to 4.9.

16. An aqueous composition, consisting of or containing
- 3.0 to 8.0 wt.%, preferably 4.0 to 7.0 wt.% and particularly preferably 5.0 to 6.0 wt.%, of the at least one ketone solvent a1), in particular acetone,
- 0.1 to 1.2 wt.%, preferably 0.3 to 1.0 wt.% and particularly preferably 0.5 to 0.8 wt.%, of the at least one aminoalkyl alkoxysilane a4), in particular 3-aminopropyltrimethoxysilane,
- 0.1 to 1.2 wt.%, preferably 0.3 to 1.0 wt.% and particularly preferably 0.5 to 0.8 wt.%, of the at least one alkyl alkoxysilane a3), in particular isobutyltrimethoxysilane,
- 0.01 to 0.75 wt.%, preferably 0.05 to 0.5 wt.% and particularly preferably 0.1 to 0.25 wt.%, of the at least one carboxylic acid a2) having 1 to 10 carbon atoms, in particular formic acid, and
- 88.85 to 96.79 wt.%, preferably 90.5 to 95.35 wt.% and particularly preferably 92.15 to 93.9 wt.%, water,
in each case based on the total weight of the aqueous composition, the components forming the aqueous composition always amounting to 100 wt.%.

17. The use of the aqueous composition according to Claim 16 as a concentrate for the preparation of the composition A) according to any one of claims 1 to 12.

## Revendications

1. Jeu de pièces d'imperméabilisation de construction, notamment jeu de pièces d'imperméabilisation de maçonnerie, avec
A) une première composition, constitué de ou contenant
a0) de l'eau,
a1) au moins un solvant cétonique, un solvant alcoolique et/ou un solvant d'ester, notamment un solvant cétonique, et
a2) au moins un acide carbonique avec 1 à 10 atomes de carbone ainsi
a3) qu'au moins un alcoxysilane alkyle et
a4) au moins un alcoxysilane aminoalkyle, un silane aminoalkyle et/ou un aminoalcoxysilane, notamment un alcoxysilane aminoalkyle,
et
B) une seconde composition, constitué de ou contenant
b1) au moins un alcoxysilane alkyle et
b2) au moins un solvant hydrocarboné ainsi
b3) qu'au moins un solvant alcoolique et/ou
b4) au moins un solvant d'ester et/ou
b5) au moins un solvant cétonique.

2. Jeu de pièces selon la revendication 1, **caractérisé en ce que**
le solvant cétonique a1) est sélectionné parmi le groupe constitué d'acétone, de méthyléthylcétone, de méthylisobutylcétone, de cyclohexanone et de mélanges de ceux-ci, notamment présente ou comprend de l'acétone,
et/ou que
l'alcoxysilane aminoalkyle a4) comprend au moins un dialcoxysilane aminoalkyle et/ou un diéthoxysilane aminoalkyle et/ou est sélectionné parmi le groupe constitué de 3-aminopropyltriméthoxysilane, de 3-aminopropyltriéthoxysilane, de 3-aminopropylméthyldiéthoxysilane, de N-(2-aminoéthyl)-3-aminopropyltriméthoxysilane, de 2-aminopropyl-3-aminopropyltriméthoxysilane, de 2-aminopropyl-3-aminopropyltriéthoxysilane, de 2-aminoéthyl-2-aminoéthyl-3-aminopropyltriméthoxysilane, de 2-aminoethyl-2-aminoethyl-3-aminopropyltriethoxysilan, de N-(n-butyl)-3-aminopropyltriméthoxysilane et de mélanges de ceux-ci, notamment présente ou comprend du 3-aminopropyltriméthoxysilane,
et/ou que
l'alcoxysilane alkyle a3) et/ou l'alcoxysilane alkyle b1) comprennent au moins un composé de silane trifonctionnel, notamment sélectionné parmi le groupe constitué de méthyltriméthoxysilane, de phényltriméthoxysilane, de méthyltriéthoxysilane, de phényltriéthoxysilane, d'isobutyltriméthoxysilane, d'isobutyltriéthoxysilane, de propyltriméthoxysilane, de propyltriéthoxysilane, d'éthyltriméthoxysilane, déthyltriéthoxysilane et de mélanges de ceux-ci, et/ou au moins un composé de silane difonctionnel, notamment sélectionné parmi le groupe constitué de diméthyldiméthoxysilane, de diméthyldiéthoxysilane, de diéthyldiéthoxysilane, de diphényldiméthoxysilane et de mélanges de ceux-ci, et/ou que ledit au moins un acide carbonique comprenant 1 à 10 atomes de carbone a2) est sélectionné parmi le groupe constitué d'acide formique, d'acide acétique, d'acide propionique, d'acide butyrique, d'acide 2-méthyl-butyrique, d'acide isovalérique, d'acide triméthylacétique, d'acide glycolique, d'acide lactique et de mélanges de ceux-ci, notamment présente ou comprend de l'acide formique,
et/ou que
ledit au moins un solvant d'ester b4) est sélectionné parmi le groupe constitué d'acétate de méthyle, d'acétate d'éthyle, d'acétate de n-butyle, d'acétate d'amyle et de mélanges de ceux-ci, notamment présente ou comprend de l'acétate d'éthyle, et/ou que
ledit au moins un solvant alcoolique b3) est sélectionné parmi le groupe constitué de méthanol, d'éthanol, d'isopropanol, de n-butanol, d'isobutanol, de butanol secondaire, de monométhyléther d'éthylèneglycol, de monoéthyléther d'éthylèneglycol, de monoisopropyléther d'éthylèneglycol, monobutyléther d'éthylèneglycol et de mélanges de ceux-ci, notamment présente ou comprend de l'éthanol et/ou de l'isopropanol,
et/ou que
ledit au moins un solvant hydrocarboné b2) est sélectionné parmi le groupe constitué de toluène, de xylène, de cyclohexane, de n-hexane, d'octane et de mélanges de ceux-ci, notamment présente ou comprend du toluène.

3. Jeu de pièces selon la revendication 1 ou 2, **caractérisé en ce que** l'alcoxysilane alkyle a3) présente ou comprend du triméthoxysilane d'isobutyle et/ou que ledit au moins un alcoxysilane alkyle b1) présente ou comprend du triéthoxyméthylsilane.

4. Jeu de pièces selon l'une quelconque des revendications précédentes, **caractérisé en ce que**
ledit au moins un solvant alcoolique b3) présente de l'éthanol et de l'isopropanol et notamment que la quantité d'isopropanol est plus grande que la quantité d'éthanol, rapportée à la fraction massique utilisée.

5. Jeu de pièces selon l'une quelconque des revendications précédentes, **caractérisé en ce que**
la première composition aqueuse A) contient
- 0,5 à 5,0 % en poids, de préférence 0,75 à 4,0 % en poids et mieux encore 1,0 à 3,0 % en poids, dudit au moins un solvant cétonique a1), notamment de l'acétone,
- 0,01 à 1,0 % en poids, de préférence 0,05 à 0,75 % en poids et mieux encore 0,1 à 0,5 % en poids, dudit au moins un alcoxysilane aminoalkyle a4), notamment du 3-aminopropyltriméthoxysilane,
- 0,01 à 1,0 % en poids, de préférence 0,05 à 0,75 % en poids et mieux encore 0,1 à 0,5 % en poids, dudit au moins un alcoxysilane alkyle a3), notamment de l'isobutyltriméthoxysilane,
- 0,001 à 0,75 % en poids, de préférence 0,005 à 0,5 % en poids et mieux encore 0,01 à 0,25 % en poids, dudit au moins un acide carbonique a2) comprenant 1 à 10 atomes de carbone, notamment de l'acide formique, et/ou
- 80,0 à 99,0 % en poids, de préférence 90,0 à 98,5 % en poids et mieux encore 95,0 à 98,0 % en poids, d'eau a0),
chaque pourcentage étant rapporté au poids total de la composition aqueuse A), dans lequel les composants formant la première composition aqueuse A) donnent constamment 100 % en poids,
et/ou, notamment et, que
la seconde composition B) contient
- 30,0 à 80,0 % en poids, de préférence 40,0 à 70 % en poids et mieux encore 45 à 65 % en poids, dudit au moins un alcoxysilane alkyle b1), notamment du triéthoxyméthylsilane,
- 1,0 à 15,0 % en poids, de préférence 1,5 à 10,0 % en poids et mieux encore 2,0 à 7,0 % en poids, dudit au moins un solvant d'ester b4), notamment de l'acétate d'éthyle,
- 20,0 à 70,0 % en poids, de préférence 25,0 à 60,0 % en poids et mieux encore 30,0 à 50,0 % en poids, dudit au moins un solvant alcoolique b3), notamment de l'éthanol et/ou de l'isopropanol, et/ou
- 0,01 à 1,0 % en poids, de préférence 0,05 à 0,75 % en poids et mieux encore 0,1 à 0,5 % en poids, dudit au moins un solvant hydrocarboné b2), notamment du toluène,
chaque pourcentage étant rapporté au poids total de la composition aqueuse B), dans lequel les composants formant la second composition aqueuse B) donnent constamment 100 % en poids.

6. Jeu de pièces selon l'une quelconque des revendications précédentes, **caractérisé en ce que**
la seconde composition B) contient 20,0 à 70,0 % en poids, de préférence 25,0 à 60,00 % en poids et mieux encore 30,0 à 50,0 % en poids d'isopropanol et 0,1 à 10,0 % en poids, de préférence 0,2 à 5,0 % en poids et mieux encore 0,5 à 3,0 % en poids d'éthanol.

7. Jeu de pièces selon l'une quelconque des revendications précédentes, **caractérisé en ce que**
la première composition A) et/ou la seconde composition B) constituent des systèmes monophasiques.

8. Jeu de pièces selon l'une quelconque des revendications précédentes, **caractérisé en ce que**
le rapport volumique des compositions A) par B) se situe dans la plage de 2:1 à 50:1, de préférence dans la plage de 5:1 à 40:1 et encore mieux dans la plage de 8:1 à 20:1.

9. Jeu de pièces selon l'une quelconque des revendications précédentes, **caractérisé en ce que**
A) une première composition, constitué de ou contenant
a0) de l'eau,
a1) au moins un solvant cétonique,
a2) au moins un acide carbonique comprenant 1 à 10 atomes de carbone,
a3) au moins un alcoxysilane alkyle,
a4) au moins un alcoxysilane aminoalkyle, un silane aminoalkyle et/ou un aminoalcoxysilane présent notamment sous une forme protonée, notamment un alcoxysilane aminoalkyle, ,
et/ou, notamment et
B) une seconde composition, constitué de ou contenant
b1) au moins un alcoxysilane alkyle et
b2) au moins un solvant hydrocarboné,
b3) au moins un solvant alcoolique et
b4) au moins solvant d'ester.

10. Jeu de pièces selon l'une quelconque des revendications précédentes, **caractérisé en ce que**
la composition A) peut être obtenue moyennant
i) la fabrication d'un mélange à base dudit au moins un acide carbonique a2) comprenant 1 à 10 atomes de carbone, notamment d'acide formique, et d'eau,
ii) la fabrication d'un mélange à base dudit au moins un solvant cétonique, un solvant alcoolique et/ou un solvant d'ester, de préférence du solvant cétonique a1), notamment d'acétone, dudit au moins un alcoxysilane aminoalkyle a4) et dudit au moins un alcoxysilane alkyle a3),
iii) le mélangeage des compositions obtenues selon l'étape i) et l'étape ii).

11. Jeu de pièces selon la revendication 10, **caractérisé en ce que** le mélangeage selon l'étape iii) comprend l'ajout de la composition obtenue selon l'étape ii) à la composition obtenue selon l'étape i).

12. Jeu de pièces selon l'une quelconque des revendications précédentes, **caractérisé en ce que**
la composition A) présente une valeur de pH dans la plage de 3,0 à 5,0 ou inférieure à 5,0, de préférence dans la plage de 3,5 à 4,9 et mieux encore dans la plage de 3,7 à 4,8, ou est ajustée sur une valeur de pH dans la plage de 3,0 à 5,0 ou inférieure à 5,0, de préférence dans la plage de 3,5 à 4,9.

13. Utilisation du jeu de pièces selon l'une quelconque des revendications précédentes pour imperméabiliser une construction, de préférence une maçonnerie, mieux encore une maçonnerie humide, et/ou pour réparer les dommages causés par l'humidité dans une construction, notamment une maçonnerie ; et/ou pour étanchéifier des constructions contre l'humidité, notamment une maçonnerie, et/ou pour former une barrière anti-humidité en particulier sensiblement horizontale dans des constructions, notamment dans une maçonnerie.

14. Agent liquide d'imperméabilisation de construction, notamment un agent d'imperméabilisation de maçonnerie, obtenu ou pouvant être obtenu moyennant le mélangeage de la composition A) et de la composition B) selon l'une quelconque des revendications 1 à 12.

15. Agent liquide d'imperméabilisation de construction selon la revendication 14, **caractérisé en ce que**
celui-ci présente une valeur de pH dans la plage de 3,0 à 5,0 ou inférieure à 5,0, de préférence dans la plage de 3,5 à 4,9 et mieux encore dans la plage de 3,7 à 4,8, ou est ajusté sur une valeur de pH dans la plage de 3,0 à 5,0 ou inférieure à 5,0, de préférence dans la plage de 3,5 à 4,9.

16. Composition aqueuse constitué de ou contenant
- 3,0 à 8,0 % en poids, de préférence 4,0 à 7,0 % en poids et encore mieux 5,0 à 6,0 % en poids dudit au moins un solvant cétonique a1), notamment d'acétone,
- 0,1 à 1,2 % en poids, de préférence 0,3 à 1,0 % en poids et encore mieux 0,5 à 0,8 % en poids dudit au moins un alcoxysilane aminoalkyle a4), notamment d'un 3-aminopropyltriméthoxysilane,
- 0,1 à 1,2 % en poids, de préférence 0,3 à 1,0 % en poids et encore mieux 0,5 à 0,8 % en poids dudit au moins un alcoxysilane alkyle a3), notamment d'un isobutyltriméthoxysilane,
- 0,01 à 0,75 % en poids, de préférence 0,05 à 0,5 % en poids et encore mieux 0,1 à 0,25 % en poids dudit au moins un acide carbonique a2) comprenant 1 à 10 atomes de carbone, notamment d'acide formique, et
- 88,85 à 96,79 % en poids, de préférence 90,5 à 95,35 % en poids et encore mieux 92,15 à 93,9 % en poids d'eau,
chaque pourcentage étant rapporté au poids total de la composition aqueuse, dans laquelle les composants formant la première composition aqueuse donnent constamment 100 % en poids.

17. Utilisation de la composition aqueuse selon la revendication 16 sous la forme d'un concentré pour fabriquer la composition A) selon l'une quelconque des revendications 1 à 12.
